# EUROPEAN PATENT SPECIFICATION

(11) **EP 2 787 768 B1**
(45) Date of publication and mention of the grant of the patent: **24.07.2019**
(21) Application number: 11878286.1
(22) Date of filing: 22.12.2011
(51) Int. Cl.: H04W 60/00

(54) **ACCESS METHOD AND SYSTEM**
ZUGRIFFSVERFAHREN UND -SYSTEM
PROCÉDÉ ET SYSTÈME D'ACCÈS

(43) Date of publication of application: 08.10.2014
(73) Proprietor: Huawei Technologies Co., Ltd., Longgang District Shenzhen, Guangdong 518129 (CN)
(72) Inventor: YU, Yijun, Shenzhen Guangdong 518129 (CN)
(74) Representative: Thun, Clemens
(86) International application number: PCT/CN2011/084437
(87) International publication number: WO 2013/091214

(56) References cited:
- EP-A1- 1 345 403
- EP-A1- 2 346 291
- WO-A1-2004/012433
- WO-A2-2010/128773
- CN-A- 1 852 474
- CN-A- 101 772 185
- US-A1- 2007 124 490
- JENQ-SHIOU LEU ET AL: "Practical considerations on end-to-end cellular/PWLAN architecture in support of bilateral roaming", WIRELESS COMMUNICATIONS AND NETWORKING CONFERENCE, 2005 IEEE NEW ORLEANS, LA, USA 13-17 MARCH 2005, PISCATAWAY, NJ, USA,IEEE, vol. 3, 13 March 2005 (2005-03-13), pages 1702-1707, XP010791431, DOI: 10.1109/WCNC.2005.1424769 ISBN: 978-0-7803-8966-3
- ALCATEL-LUCENT ET AL: "PDN connectivity service with GTP based S2b", 3GPP DRAFT; S2-104123, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 2 September 2010 (2010-09-02), XP050459010, [retrieved on 2010-09-02]

## Description

### TECHNICAL FIELD

The present invention relates to a communications technology, and in particular, to an access method, a mobility management device, and a user equipment.

### BACKGROUND

Generally, a user equipment (User Equipment, UE for short) may access the Internet through a mobile communications network to which the user equipment belongs, to implement a data service provided by the Internet, such as QQ, Sina Weibo, webpage browsing, or email.

For example, EP 1 345 403 A1 refers to a telecommunications system to which a subscriber device without a subscriber identity module can be given access. The system comprises a subscriber device (PDA) without a subscriber identity module arranged to send a connection request containing the identifier (MSISDN);; a network server (NS) arranged to receive the connection request, to send a confirmation request to a subscriber device (MS) with a subscriber identity module and to provide the subscriber device (PDA) without a subscriber identity module with access to the telecommunication network and to send a billing register (AC) a notification of the costs related to the use of the subscriber device without a subscriber identity module if a confirmation is transmitted from the subscriber device (MS) with a subscriber identity module that the user of the subscriber device (MS) with a subscriber identity module will pay the costs related to the use of the subscriber device (PDA) without a subscriber identity module.

Further, EP 2 346 291 A1 refers to a method of a network paging a user equipment for error recovery in a wireless communication system when a network failure occurs includes the network sending a paging message to the user equipment according to an IMSI or an IMEI of the user equipment registered to the network in the attach procedure before the network failure. When the user equipment does not have the IMSI, the network uses the IMEI of the user equipment for paging the user equipment for error recovery.

Jenq-Shiou Leu; Rong-Horng Lai; Hsin-I Lin; Wei-Kuan Shih Practical considerations on end-to-end cellular/PWLAN architecture in support of bilateral roaming - Wireless Communications and Networking Conference, 2005 IEEE New Orleans, LA, USA 13-17 March 2005, ISBN 978-0-7803-8966-3; ISBN 0-7803-8966-2 refers to considerations on ent-to-end cellular/PWLAN architecture in support of bilateral roaming and discloses carrying out web-based authentication and billing for users without SIM modules in WLAN environment wherein the AC redirects user to a login page.

US2007/124490 A1 discloses authentication for SIM-less terminals using LAN-based login password. WO 2004 / 012433 A1 discloses access using PDP context activation to an APN which is not subscribed and requesting the user to input credit card information for billing. This procedure involves the SGSN contacting then the selected APN/GGSN.

However, in the prior art, in order to access the Internet through the mobile communications network, the UE needs to establish a subscription relationship with an operator, for example, establish a subscription relationship with an operator by using a subscriber card inserted into the UE, which leads to a decrease in access flexibility of the UE.

### SUMMARY

The present invention provides an access method, a mobility management device, and a user equipment, so as to improve access flexibility of a UE.

In a first aspect an access method performed by a system comprising a mobility management device, a user equipment, UE, a portal server and a gateway device is provided, according to claim 1.

In a first implementation form of the first aspect, before the receiving, by the mobility management device, the access request message sent by the UE, further comprising:
sending, by the mobility management device, third indication information to the UE, wherein the third indication information is used for indicating that the mobile communications network, to which the mobility management device belongs, supports the UE to perform the equipment access.

In a second aspect an access method performed by a system comprising a mobility management device, a user equipment, UE, a portal server and a gateway device is provided, according to independent claim 3. In a first implementation form of the second aspect before the receiving, by the mobility management device, the access request message sent by the UE, further comprising:
sending, by the mobility management device, third indication information to the UE, wherein the third indication information is used for indicating that the mobile communications network, to which the mobility management device belongs, supports the UE to perform the equipment access.

In a third aspect an access method performed by a system comprising a mobility management device, a user equipment, UE, a portal server and a gateway device is provided, according to independent claim 5.

In a first implementation form of the third aspect before the receiving, by the mobility management device, the access request message sent by the UE, further comprising:
sending, by the mobility management device, third indication information to the UE, wherein the third indication information is used for indicating that the mobile communications network, to which the mobility management device belongs, supports the UE to perform the equipment access.

In a fourth aspect a system comprising a mobility management device, a user equipment, UE, a portal server and a gateway device is provided, according to independent claim 7.

In the following, the references to the invention or embodiments thereof which are directed to individual network elements in isolation and methods therein do not fall under the scope of the invention which is instead directed to the whole system and method therein, as defined by the claims. They are merely retained as examples which are useful for understanding the invention.

It can be known from the foregoing technical solutions that, in the embodiments of the present invention which are defined by the claims, a mobility management device receives a first access request message sent by a UE, where the first access request message includes first indication information, and the first indication information is used for indicating that the UE performs equipment access processing, so that the mobility management device can perform equipment access for the UE according to the first indication information. This avoids a problem in the prior art that a UE needs to establish a subscription relationship with an operator in order to access the Internet through a mobile communications network, thereby improving access flexibility of the UE.

### BRIEF DESCRIPTION OF DRAWINGS

To describe the technical solutions in the embodiments of the present invention or in the prior art more clearly, the following briefly introduces the accompanying drawings required for describing the embodiments or the prior art.
FIG. 1 is a schematic flowchart of an access method according to an embodiment of the present invention;
FIG. 2 is a schematic flowchart of an access method according to another embodiment of the present invention;
FIG. 3 is a schematic flowchart of an access method according to another embodiment of the present invention;
FIG. 4 is a schematic flowchart of an access method according to another embodiment of the present invention;
FIG. 5 is a schematic flowchart of an access method according to another embodiment of the present invention;
FIG. 6 is a schematic structural diagram of a mobility management device according to another embodiment of the present invention;
FIG. 7 is a schematic structural diagram of a mobility management device according to another embodiment of the present invention;
FIG. 8 is a schematic structural diagram of a user equipment according to another embodiment of the present invention; and
FIG. 9 is a schematic structural diagram of a user equipment according to another embodiment of the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention.

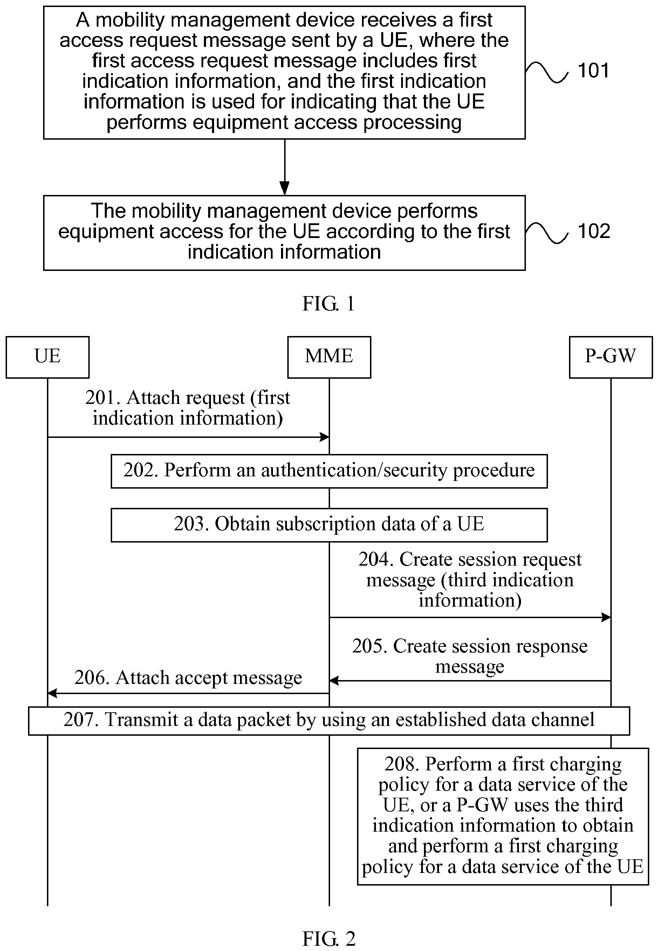

FIG. 1 is a schematic flowchart of an access method according to an embodiment of the present invention. As shown in FIG. 1, the access method in this embodiment may include:
101: A mobility management device receives a first access request message sent by a UE, where the first access request message includes first indication information, and the first indication information is used for indicating that the UE performs equipment access processing.
102: The mobility management device performs equipment access for the UE according to the first indication information.

The equipment access refers to a mechanism that, in a case where there is no valid subscription data, the UE still can register in a mobile communications network. As for the equipment access mechanism, a specific charging manner is generally used, for example, after completing the equipment access, the UE needs to input information, such as an account number, before accessing a data service so as to perform charging. A typical scenario of the equipment access is that, the UE does not have a subscriber identity module (Subscriber Identity Module, SIM for short) card or a universal integrated circuit card (Universal Integrated Circuit Card, UICC for short); in this case, the UE identifies the UE by using an international mobile equipment identity (International Mobile Equipment Identity, IMEI for short) of the UE instead of an identifier recorded in the SIM card or the UICC (such as an IMSI, or a
P-TMSI or a GUTI), and adds the IMEI in a registration request message (such as an attach message) sent to a mobile communications network; and a device (such as a mobility management device) in the mobile communications network accepts the registration request according to the first indication information.

When the UE has the valid subscription data, and the UE also allows to perform the foregoing equipment access request, the UE may use the identifier (such as the P-TMSI or the GUTI) recorded in the SIM card or the UICC to identify the UE; and the device (such as a mobility management device) in the mobile communications network accepts the registration request according to the first indication information.

When the UE has the valid subscription data, and completes normal access (that is, not the equipment access), the UE may still instruct, by using a location update procedure, the mobile communications network to modify a normal access manner to an equipment access manner. In addition, after completing the foregoing normal access, the UE may also indicate, to the mobile communications network in a bearer establishment procedure, such as a PDN connectivity establishment procedure or PDP activation, that the PDN connectivity or the PDP uses the equipment access manner.

After the UE completes the equipment access, the UE may obtain at least one valid IP address from the mobile communications network, and the UE may use the IP address to implement a subsequent data service. Generally, before the UE implements the data service, the UE is generally required to perform further identity authentication, so as to meet a demand, such as charging.

Accordingly, a capability of the UE for supporting the equipment access refers to that the UE can provide the foregoing mechanism. A capability of the mobile communications network for supporting the equipment access refers to that the device in the mobile communications network can provide the foregoing mechanism, including that a mobility management entity in the mobile communications network accepts the registration request that the UE is identified by using the IMEI, the mobile communications network can provide at least one valid IP address to the UE performing the equipment access, and the like.

Optionally, before 101, the mobility management device or a wireless access device may further send second indication information to the UE, where the second indication information is used for indicating that the mobile communications network, to which the mobility management device or the wireless access device belongs, supports the UE to perform the equipment access processing. For example, the wireless access device may send a broadcast message, where the broadcast message includes the second indication information, and after receiving the foregoing broadcast message, the UE may know that the mobile communications network, to which the wireless access device belongs, supports an equipment access function. For another example, the mobility management device receives a second access request message sent by the UE, and may send a second access response message to the UE, where the second access response message includes the second indication information; and after receiving the foregoing second access response message, the UE may immediately know that the mobile communications network, to which the mobility management device belongs, supports the equipment access function. The second access request message may include, but is not limited to, an attach request message, a location update request message, a packet data network (Packet Data Network, PDN for short) connectivity request message, or an activate packet data protocol (Packet Data Protocol, PDP for short) context request message; accordingly, the second access response message may correspondingly include an attach accept message, an attach reject message, a location update accept message, a location update reject message, a PDN connectivity accept message, a PDN connectivity reject message, an activate PDP context accept message, or an activate PDP context reject message.

Optionally, the first access request message may include, but is not limited to, the attach request message, the location update request message, the PDN connectivity request message, or the activate PDP context request message.

In an optional embodiment of the present invention, if the first access request message is the attach request message, in 102, the mobility management device may specifically construct a context of the UE, where the context of the UE is generated by the mobility management device according to the subscription data of the UE provided by an HLR/HSS; if the mobility management device cannot acquire the valid subscription data of the UE from the HLR/HSS, for example, the HLR/HSS has no subscription data of the UE, or the UE is not allowed to perform access at a current location, the mobility management device may generate the context of the UE according to the first indication information and according to local configuration data or default data, and the mobility management device accepts the first access request message according to the first indication information.

In an application scenario of the embodiment of the present invention, after the mobility management device accepts the first access request message, the mobility management device may further send a first create session request message to a gateway device according to the first indication information, where the first create session request message includes third indication information, and the third indication information is used for instructing the gateway device to perform a first charging policy for a data service of the UE, or instructing the gateway device to use the third indication information to obtain and perform a first charging policy for the data service of the UE.

In another application scenario of the embodiment of the present invention, after the mobility management device accepts the first access request message, the mobility management device may further receive the activate PDP context request message sent by the UE, and send a second create session request message to the gateway device according to the first indication information, where the second create session request message includes fourth indication information, and the fourth indication information is used for instructing the gateway device to perform the first charging policy for the data service of the UE, or instructing the gateway device to use the fourth indication information to obtain and perform the first charging policy for the data service of the UE.

In an optional embodiment of the present invention, if the first access request message is the PDN connectivity request message or the activate PDP context request message, in 102, the mobility management device may specifically send a third create session request message to the gateway device according to the first indication information, where the third create session request message includes fifth indication information, and the fifth indication information is used for instructing the gateway device to perform the first charging policy for the data service of the UE, or instructing the gateway device to use the fifth indication information to obtain and perform the first charging policy for the data service of the UE.

In an optional embodiment of the present invention, if the first access request message is the location update request message, in 102, the mobility management device may specifically send a delete bearer request message to the gateway device according to the first indication information, receive a delete bearer response message sent by the gateway device, and send a fourth create session request message to the gateway device, where the fourth create session request message includes sixth indication information, and the sixth indication information is used for instructing the gateway device to perform the first charging policy for the data service of the UE, or instructing the gateway device to use the sixth indication information to obtain and perform the first charging policy for the data service of the UE.

In an optional embodiment of the present invention, if the first access request message is the location update request message, in 102, the mobility management device may further specifically send a modify bearer request message to the gateway device according to the first indication information, where the modify bearer request message includes seventh indication information, and the seventh indication information is used for instructing the gateway device to perform the first charging policy for the data service of the UE, or instructing the gateway device to use the seventh indication information to obtain and perform the first charging policy for the data service of the UE. Optionally, after 102, the mobility management device may further receive a third access request message sent by the UE, where the third access request message includes eighth indication information, the eighth indication information is used for indicating that the UE cancels the equipment access, and the mobility management device cancels the equipment access for the UE according to the eighth indication information.

Optionally, the third access request message may include, but is not limited to, the location update request message, the PDN connectivity request message, or the activate PDP context request message.

In an optional embodiment of the present invention, if the third access request message is the PDN connectivity request message or the activate PDP context request message, the mobility management device may specifically send a sixth create session request message to the gateway device according to the eighth indication information, where the sixth create session request message includes tenth indication information, and the tenth indication information is used for instructing the gateway device to perform a second charging policy for the data service of the UE, or instructing the gateway device to use the tenth indication information to obtain and perform a second charging policy for the data service of the UE.

In an optional embodiment of the present invention, if the third access request message is the location update request message, if the context of the UE stored in the mobility management device is generated according to the local configuration data or the default data, or if the mobility management device cannot acquire the subscription data of the UE from the HLR/HSS, or if the subscription data of the UE acquired by the mobility management device from the HLR/HSS does not allow access of the UE, the mobility management device may specifically perform a detach (Detach) procedure according to the eighth indication information.

In an optional embodiment of the present invention, if the third access request message is the location update request message, the mobility management device may specifically send the delete bearer request message to the gateway device according to the eighth indication information, and receive the delete bearer response message sent by the gateway device, and the mobility management device sends the sixth create session request message to the gateway device, where the sixth create session request message includes eleventh indication information, and the eleventh indication information is used for instructing the gateway device to perform the second charging policy for the data service of the UE, or instructing the gateway device to use the eleventh indication information to obtain and perform the second charging policy for the data service of the UE.

In an optional embodiment of the present invention, if the third access request message is the location update request message, the mobility management device may further specifically send the modify bearer request message to the gateway device, where the modify bearer request message includes twelfth indication information, and the twelfth indication information is used for instructing the gateway device to perform the second charging policy for the data service of the UE, or instructing the gateway device to use the tenth indication information to obtain and perform the second charging policy for the data service of the UE.

In this embodiment, a mobility management device receives a first access request message sent by a UE, where a first access request message includes first indication information, and the first indication information is used for indicating that the UE performs equipment access processing, so that the mobility management device can perform equipment access for the UE according to the first indication information. This avoid a problem in the prior art that a UE needs to establish a subscription relationship with an operator in order to access the Internet through a mobile communications network, thereby improving access flexibility of the UE.

The technical solutions of the present invention may be applied in various communications systems, such as a General Packet Radio Service (General Packet Radio Service, GPRS for short) system, a Wideband Code Division Multiple Access (Wideband Code Division Multiple Access, WCDMA for short) system, and a long term evolution (Long Term Evolution, LTE for short) system.

The mobility management device may be a serving General Packet Radio Service (General Packet Radio Service, GPRS for short) supporting node (Serving GPRS Supporting Node, SGSN for short) in the GPRS/WCDMA system, and may further be a mobility management entity (Mobility Management Entity, MME for short) in the LTE system.

The wireless access device may be a base station (Base Transceiver Station, BTS for short) in the GPRS system, may further be a base station (NodeB) in the WCDMA system, and may further be an evolved base station (Evolved NodeB, eNodeB or eNB for short) in the LTE system, or the like. The gateway device may be a gateway GPRS supporting node (Gateway GPRS Supporting Node, GGSN for short) in the GPRS/WCDMA system, and may further be a packet data network gateway (Packet Data Network Gateway, P-GW for short) in the LTE system.

To make the method provided in the embodiment of the present invention more clearly, the LTE system is used as an example in the following. A procedure of accessing the GPRS/WCDMA is processed similarly, and a difference thereof is mainly a difference of a name of a network device: in a case where the GPRS/WCDMA is accessed, the MME is replaced by the SGSN in the following embodiment, and when the SGSN is a Gn/Gp SGSN, the P-GW is replaced by the GGSN, and the SGSN directly communicates with the GGSN, that is, the S-GW does not exist; and when the SGSN is an S4 SGSN, the SGSN communicates with the P-GW by using the S-GW. The so-called Gn/Gp SGSN refers to that the SGSN communicates with the GGSN through a Gn/Gp interface; and the so-called S4 SGSN refers to that the SGSN communicates with the S-GW through an S4 interface, and then communicates with the P-GW.

FIG. 2 is a schematic flowchart of an access method according to another embodiment of the present invention. As shown in FIG. 2, the access method in this embodiment may include:
201: A UE sends an attach request (Attach Request) message to an MME, where the attach request message includes first indication information, and the first indication information is used for indicating that the UE performs equipment access processing.
202: The MME performs an authentication/security procedure.

If in 201, the attach request message received by the MME includes a global unique temporary identity (Global Unique Temporary Identity, GUTI for short) or an international mobile subscriber identity (International Mobile Subscriber Identity, IMSI for short) of the UE, the MME interacts with a home location register (Home Location Register, HLR for short)/home subscriber server (Home Subscriber Server, HSS for short), performs the authentication/security procedure, and acquires an authentication/security parameter of the UE.

If in 201, the attach request message received by the MME does not include the GUTI or the IMSI of the UE, but includes the IMEI of the UE, the MME does not interact with the HLR/HSS according to the first indication information included in the attach request message in step 201, and generates the authentication/security parameter of the UE according to local configuration data or default data.

203: The MME obtains subscription data of the UE.

If in 201, the attach request message received by the MME includes the GUTI or the IMSI of the UE, the MME interacts with the HLR/HSS, performs an update location procedure, obtains the subscription data of the UE, and generates a context of the UE. If the MME cannot acquire valid subscription data from the HLR/HSS, for example, the UE has no subscription data, or the UE is not allowed to perform access at a current location, or when in step 201, the IMEI of the UE is included in the attach request message received by the MME, the MME generates the context of the UE according to the first indication information included in the attach request message in step 201 and according to the local configuration data or the default data.

204: The MME sends a create session request (Create Session Request) message to a P-GW by using a serving gateway (Serving Gateway, S-GW for short) according to the first indication information included in the attach request message, where the create session request message includes third indication information, and the third indication information is used for instructing the P-GW to perform a first charging policy for a data service of the UE, or instructing the P-GW to use the third indication information to obtain and perform a first charging policy for a data service of the UE.

For example, the third indication information may be a specific access point name (Access Point Name, APN for short), or may also be an independent indication identifier, which is not limited in this embodiment.

Optionally, before 204, the MME may further receive an activate PDP context request message sent by the UE, and then, perform 204.

205: The P-GW sends a create session response (Create Session Response) message to the MME by using the S-GW.

Optionally, the foregoing create session response message may further include indication information, so as to indicate that the P-GW performs the equipment access processing for the UE, that is, the P-GW performs the first charging policy for the data service of the UE, or uses the indication information to obtain and perform the first charging policy for the data service of the UE. 206: The MME sends an attach accept (Attach Accept) message to the UE.

Optionally, the foregoing attach accept message may further include the indication information, so as to indicate that a network side performs the equipment access processing for the UE, that is, the P-GW performs the first charging policy for the data service of the UE, or uses the indication information to obtain and perform the first charging policy for the data service of the UE.

So far, the network side completes establishing a data channel for the data service of the UE.

207: The UE transmits a data packet through the established data channel.

208: After the P-GW receives the data packet, the P-GW performs the first charging policy for the data service of the UE, or the P-GW uses the third indication information to obtain and perform the first charging policy for the data service of the UE.

For example, the first charging policy may specifically be that: the P-GW sends a triggering message to a portal server (Portal Server), so as to trigger to complete charging processing. Accordingly, the portal server sends a webpage for data service charging to the UE according to the received triggering message, and the foregoing webpage may prompt a user of the UE to input a credit card account number to purchase a charging quota, such as charged traffic or a charged duration; and may also prompt the user of the UE to input information of an existing charging account and the like.

So far, the user of the UE may make a payment based on the charging quota according to the webpage for the data service charging provided by the portal server, so as to complete charging of the data service.

It should be noted that: if the UE accesses the GPRS system or the WCDMA system, step 204 to step 205, and step 207 to step 208 in the foregoing attach procedure are not performed.

In this embodiment, in an attach procedure of a UE, an MME receives an attach request message sent by the UE, where the attach request message includes first indication information, and the first indication information is used for indicating that the UE performs equipment access processing, so that the MME can perform equipment access for the UE according to the first indication information. This avoid a problem in the prior art that a UE needs to establish a subscription relationship with an operator in order to access the Internet through a mobile communications network, thereby improving access flexibility of the UE.

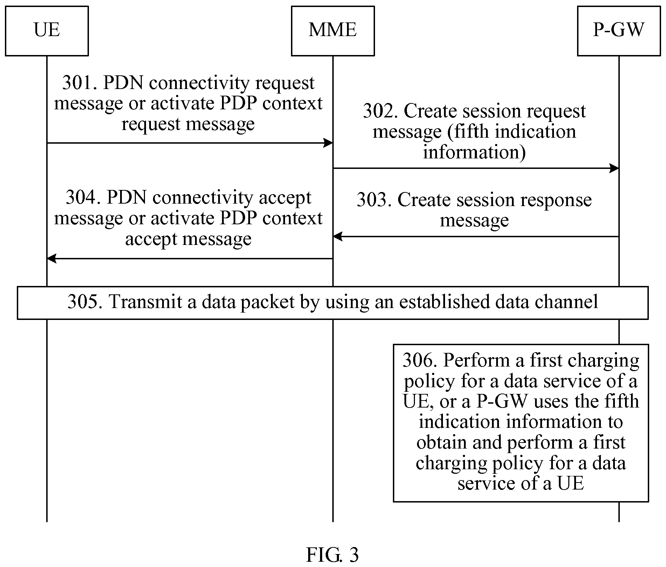

FIG. 3 is a schematic flowchart of an access method according to another embodiment of the present invention. As shown in FIG. 3, the access method in this embodiment may include:
301: A UE sends a PDN connectivity request (PDN Connectivity Request) message or an activate PDP context request (Activate PDP Context Request) message to an MME, where the attach request message includes first indication information, and the first indication information is used for indicating that the UE performs equipment access processing.

If the MME does not support specific processing (that is, the UE performs the equipment access processing) indicated by the foregoing first indication information, the MME sends a PDN connectivity reject (PDN Connectivity Reject) message or an activate PDP context reject (Activate PDP Context Reject) message to the UE, and the procedure is terminated.

302: The MME sends a create session request message to a P-GW by using an S-PW according to the first indication information included in the PDN connectivity request message or the activate PDP context request message, where the create session request message includes fifth indication information, and the fifth indication information is used for instructing the P-GW to perform a first charging policy for a data service of the UE, or instructing the P-GW to use the fifth indication information to obtain and perform a first charging policy for a data service of the UE.

For example, the fifth indication information may be a specific APN, or may also be an independent indication identifier, which is not limited in this embodiment.

The foregoing create session request message may specifically be a create PDP context request (Create PDP Context Request) message in a GPRS system or a WCDMA system or a create session request (Create Session Request) message in an LTE system.

303: The P-GW sends a create session response (Create Session Response) message to the MME by using the S-GW.

Optionally, the foregoing create session response message may further include indication information, so as to indicate that the P-GW performs the equipment access processing for the UE, that is, the P-GW performs the first charging policy for the data service of the UE, or uses the indication information to obtain and perform the first charging policy for the data service of the UE. 304: The MME sends a PDN connectivity accept (PDN Connectivity Accept) message or an activate PDP context accept (Activate PDP Context Accept) message to the UE.

Optionally, the foregoing PDN connectivity accept message or activate PDP context accept message may further include the indication information, so as to indicate that a network side performs the equipment access processing for the UE, that is, the P-GW performs the first charging policy for the data service of the UE, or uses the indication information to obtain and perform the first charging policy for the data service of the UE.

So far, the network side completes establishing a data channel for the data service of the UE.

305: The UE transmits a data packet through the established data channel.

306: After the P-GW receives the data packet, the P-GW performs the first charging policy for the data service of the UE, or the P-GW uses the fifth indication information to obtain and perform the first charging policy for the data service of the UE.

For example, the first charging policy may specifically be that: the P-GW sends a triggering message to a portal server (Portal Server), so as to trigger to complete charging processing. Accordingly, the portal server sends a webpage for data service charging to the UE according to the received triggering message, and the foregoing webpage may prompt a user of the UE to input a credit card account number to purchase a charging quota, such as charged traffic or a charged duration; and may also prompt the user of the UE to input information of an existing charging account and the like.

So far, the user of the UE may make a payment based on the charging quota according to the webpage for the data service charging provided by the portal server, so as to complete charging of the data service.

In this embodiment, in a procedure of establishing a new data channel by a UE, an MME receives a PDN connectivity request message or an activate PDP context request message sent by the UE, where the PDN connectivity request message or the activate PDP context request message includes first indication information, and the first indication information is used for indicating that the UE performs equipment access processing, so that the MME can perform equipment access for the UE according to the first indication information. This avoid a problem in the prior art that a UE needs to establish a subscription relationship with an operator in order to access the Internet through a mobile communications network, thereby improving access flexibility of the UE.

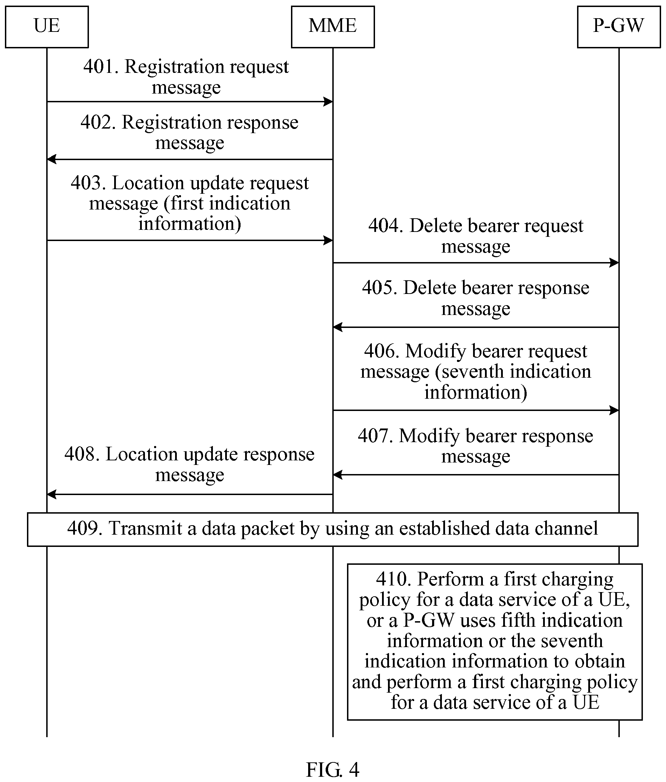

FIG. 4 is a schematic flowchart of an access method according to another embodiment of the present invention. As shown in FIG. 4, the access method in this embodiment may include:
401: A UE sends a registration request message to an MME.

The foregoing registration request message may include, but is not limited to, an attach request (Attach Request) message, or a location update request message (may include, but is not limited to, a routing area update request (RAU Request) message or a tracking area update request (TAU Request) message).

402: The MME performs a registration procedure, and returns a registration response message.

For example, the MME interacts with an HLR/HSS, acquires subscription data of the UE, and the like, and sends the registration response message to the UE.

When a network supports performing of equipment access processing by the UE, second indication information is included in the registration response message, and the second indication information is used for indicating that a network side supports the UE to perform the equipment access processing.

If the UE has no valid subscription data, or is not allowed to access the network, the MME sends the registration response message to the UE. The registration response message may include, but is not limited to, an attach reject (Attach Reject) message, or a location update accept message (which may include, but is not limited to, a routing area update reject (RAU Reject) message or a tracking area update reject (TAU Reject) message).

In this case, if the UE supports the foregoing equipment access processing, after receiving an indication sent by the MME and indicating that the network supports the UE to perform the equipment access processing, the UE may perform steps in the embodiment corresponding to FIG. 2 to reinitiate an attach procedure, and the UE provides a first indication in the attach procedure, and performs the equipment access processing.

If the UE is allowed to access the network, the MME may send the registration response message to the UE, where the registration response message may include, but is not limited to, an attach accept (Attach Accept) message, or a location update accept message (which may include, but is not limited to, a routing area update accept (RAU Accept) message or a tracking area update accept (TAU Accept) message).

In this case, if the UE supports the equipment access processing, the UE may perform steps in the embodiment corresponding to FIG. 2 to reinitiate the attach procedure, or perform the foregoing steps.

403: The UE sends the location update request message to the MME, where the registration request message includes first indication information, and the first indication information is used for indicating that the UE performs the equipment access processing.

The foregoing location update request message may include, but is not limited to, the routing area update request (RAU Request) message or the tracking area update request (TAU Request) message.

404: The MME sends a delete bearer request message to a P-GW by using an S-GW.

If a current UE has already established a bearer (such as a PDP context or an EPS bearer) using an EPS standard charging mode, the MME may send the delete bearer request message to the P-GW by using the S-PW, so as to delete the bearer that has already been established by the UE.

The foregoing delete bearer request message may include, but is not limited to, a delete PDP context request (Delete PDP Context Request) message or a delete bearer command (Delete Bearer Command) message.

405: The P-GW deletes the bearer, and sends a delete bearer response message to the MME by using the S-GW.

For example, the P-GW receives the delete PDP context request (Delete PDP Context Request) message; the P-GW deletes the bearer, and sends the delete PDP context response (Delete PDP Context Response) message to the MME by using the S-GW.

For another example, the P-GW receives the delete bearer command (Delete Bearer Command) message, the P-GW initiates a delete bearer procedure, that is, the P-GW sends the delete bearer request (Delete Bearer Request) message to the MME by using the S-GW, and then the MME sends the delete bearer response (Delete Bearer Response) message to the P-GW by using the S-GW. Optionally, according to a service demand, after a relevant bearer is deleted, the UE or the P-GW may initiate a bearer establishment procedure again, and for the bearer establishment procedure initiated by the UE, reference may be specifically made to relevant content in the embodiment corresponding to FIG. 3, which is not described herein again. Similarly, in a bearer establishment procedure initiated by the P-GW, the MME may similarly instruct, by using indication information and in a bearer establishment response message sent to the P-GW, the P-GW to perform a first charging policy for a data service of the UE, or instruct the P-GW to use fifth indication information in the embodiment corresponding to FIG. 3 to obtain and perform a first charging policy for a data service of the UE.

Alternatively, 404 and 405 may also not be performed, and 406 and 407 are performed.

406: The MME sends a modify bearer request message to the P-GW by using the S-GW, where the modify bearer request message includes seventh indication information, and the seventh indication information is used for instructing a gateway device to perform the first charging policy for the data service of the UE, or instructing the gateway device to use the seventh indication information to obtain and perform the first charging policy for the data service of the UE.

The foregoing modify bearer request message may include, but is not limited to, an update PDP context request (Update PDP Context Request) message or a modify bearer command (Modify Bearer Command) message.

407: The P-GW modifies the bearer, and sends a modify bearer response message to the MME by using the S-GW.

For example, the P-GW receives the update PDP context request (Update PDP Context Request) message; and the P-GW updates the bearer, and sends an update PDP context response (Update PDP Context Response) message to the MME by using the S-GW.

For another example, the P-GW receives the modify bearer command (Modify Bearer Command) message, the P-GW initiates an update bearer procedure, that is, the P-GW sends an update bearer request (Update Bearer Request) message to the MME by using the S-GW, and then the MME sends an update bearer response (Update Bearer Response) message to the P-GW by using the S-GW.

408: The MME sends a location update response message to the UE.

The foregoing location update response message may include, but is not limited to, a routing area update accept (RAU Accept) message or a tracking area update accept (TAU Accept) message.

Optionally, the foregoing location update response message may further include the indication information, so as to indicate that a network side performs the equipment access processing for the UE, that is, the P-GW performs the first charging policy for the data service of the UE, or uses the seventh indication information to obtain and perform the first charging policy for the data service of the UE.

So far, the network side completes establishing a data channel for the data service of the UE.

409: The UE transmits a data packet through the established data channel.

410: After the P-GW receives the data packet, the P-GW performs the first charging policy for the data service of the UE, or the P-GW uses the fifth indication information or the seventh indication information to obtain and perform the first charging policy for the data service of the UE.

For example, the first charging policy may specifically be that: the P-GW sends a triggering message to a portal server (Portal Server), so as to trigger to complete charging processing. Accordingly, the portal server sends a webpage for data service charging to the UE according to the received triggering message, and the foregoing webpage may prompt a user of the UE to input a credit card account number to purchase a charging quota, such as charged traffic or a charged duration; and may also prompt the user of the UE to input information of an existing charging account and the like.

So far, the user of the UE may make a payment based on the charging quota according to the webpage for the data service charging provided by the portal server, so as to complete charging of the data service.

In this embodiment, a UE learns in a registration procedure that a mobile communications network supports the UE to perform equipment access processing, and the UE completes, according to an indication, equipment access processing by performing an attach procedure or a location update procedure which carries first indication information. In the location update procedure of the UE, an MME receives a location update request message sent by the UE, where the location update request message includes the first indication information, and the first indication information is used for indicating that the UE performs the equipment access processing, so that the MME can perform the equipment access for the UE according to the first indication information. This avoid a problem in the prior art that a UE needs to establish a subscription relationship with an operator in order to access the Internet through a mobile communications network, thereby improving access flexibility of the UE.

It should be noted that: in this embodiment, before performing the location update procedure carrying the first indication information for the equipment access, the UE does not need to first perform the registration procedure of step 401 to step 402, that is, step 403 to step 410 may be independently performed, and an indication of whether the UE supports the equipment access processing does not depend on the mobile communications network. When the UE performs the location update procedure requesting performing of the equipment access, if the mobile communications network does not support an equipment access function, the MME rejects a location update request of the UE.

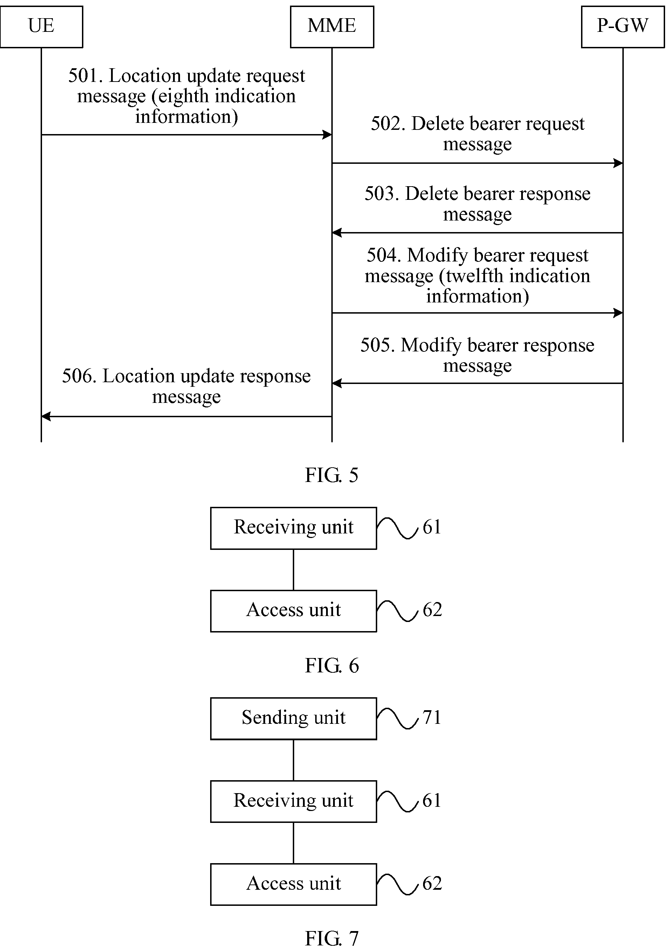

FIG. 5 is a schematic flowchart of an access method according to another embodiment of the present invention. As shown in FIG. 5, based on the embodiments corresponding to FIG. 2, FIG. 3, and FIG. 4, that is, after a user of a UE may make a payment according to a charging quota according to a webpage of data service charging provided by a portal server, to complete charging of a data service, the access method of this embodiment may further include:
501: The UE sends a location update request message to an MME, where the location update request message includes eighth indication information, and the eighth indication information is used for indicating that the UE cancels equipment access.

The foregoing location update request message may include, but is not limited to, a routing area update request (RAU Request) message or a tracking area update request (TAU Request) message. 502: The MME sends a delete bearer request message to a P-GW by using an S-GW.

If a current UE has already established a bearer (such as a PDP context or an EPS bearer) using a non-EPS standard charging mode, the MME may send the delete bearer request message to the P-GW by using the S-PW, so as to delete the bearer that has already been established by the UE. The foregoing delete bearer request message may include, but is not limited to, a delete PDP context request (Delete PDP Context Request) message or a delete bearer command (Delete Bearer Command) message.

503: The P-GW deletes the bearer, and sends a delete bearer response message to the MME by using the S-GW.

For example, the P-GW receives the delete PDP context request (Delete PDP Context Request) message; the P-GW deletes the bearer, and sends the delete PDP context response (Delete PDP Context Response) message to the MME by using the S-GW.

For another example, the P-GW receives the delete bearer command (Delete Bearer Command) message, the P-GW initiates a delete bearer procedure, that is, the P-GW sends a delete bearer request (Delete Bearer Request) message to the MME by using the S-GW, and then the MME sends the delete bearer response (Delete Bearer Response) message to the P-GW by using the S-GW. Optionally, according to a service demand, after a relevant bearer is deleted, the UE or the P-GW may initiate a bearer establishment procedure again, and for a bearer establishment procedure initiated by the UE or the P-GW, reference may be specifically made to relevant content in the prior art, which is not described herein again.

Alternatively, 502 and 503 may also not be performed, and 504 and 505 are performed.

504: The MME sends a modify bearer request message to the P-GW by using the S-GW, where the modify bearer request message includes twelfth indication information, and the twelfth indication information is used for instructing a gateway device to perform a second charging policy for a data service of the UE, or instructing a gateway device to use the twelfth indication information to obtain and perform a second charging policy for a data service of the UE.

The foregoing modify bearer request message may include, but is not limited to, an update PDP context request (Update PDP Context Request) message or a modify bearer command (Modify Bearer Command) message.

505: The P-GW modifies the bearer, and sends a modify bearer response message to the MME by using the S-GW.

For example, the P-GW receives the update PDP context request (Update PDP Context Request) message; and the P-GW updates the bearer, and sends an update PDP context response (Update PDP Context Response) message to the MME by using the S-GW.

For another example, the P-GW receives the modify bearer command (Modify Bearer Command) message, the P-GW initiates an update bearer procedure, that is, the P-GW sends an update bearer request (Update Bearer Request) message to the MME by using the S-GW, and then the MME sends an update bearer response (Update Bearer Response) message by using the S-GW.

506: The MME sends a location update response message to the UE.

The foregoing location update response message may include, but is not limited to, a routing area update accept (RAU Accept) message or a tracking area update accept (TAU Accept) message. Optionally, the foregoing location update response message may further include indication information, so as to indicate that a network side performs equipment access processing for the UE, that is, the P-GW may not perform a first charging policy for the data service of the UE, or may not use other indication information to obtain and perform a first charging policy for the data service of the UE.

So far, the network side cancels the equipment access processing for the UE.

In this embodiment, in a location update procedure of a UE, an MME receives a location update request message sent by the UE, where the location update request message includes eighth indication information, and the eighth indication information is used for indicating that the UE cancels equipment access, so that the MME can cancel the equipment access for the UE according to the eighth indication information. This avoid a problem in the prior art that a UE needs to establish a subscription relationship with an operator in order to access the Internet through a mobile communications network, thereby improving access flexibility of the UE.

It should be noted that: for simple description, the foregoing method embodiments are expressed as a combination of a series of actions. However, persons skilled in the prior art should know that the present invention is not limited to the described action sequence, which is because some steps may use another sequence or be performed simultaneously according to the present invention. In addition, persons skilled in the prior art should also know that, embodiments described in the specification are exemplary embodiments, and actions and modules involved are not necessarily required in the present invention.

In the foregoing embodiment, description for each embodiment has its emphasis, and for a part of an embodiment which is not described in detail, reference may be made to relevant descriptions of other embodiments.

FIG. 6 is a schematic structural diagram of a mobility management device according to another embodiment of the present invention. As shown in FIG. 6, the mobility management device in this embodiment may include a receiving unit 61 and an access unit 62. The receiving unit 61 is configured to receive a first access request message sent by a UE, where the first access request message includes first indication information, and the first indication information is used for indicating that the UE performs equipment access processing; and the access unit 62 is configured to perform equipment access for the UE according to the first indication information.

All functions of the mobility management device in the embodiment corresponding to the foregoing FIG. 1 and the MMEs in the embodiments corresponding to FIG. 2, FIG. 3, FIG. 4, and FIG. 5 may be implemented by the mobility management device provided in this embodiment.

Optionally, as shown in FIG. 7, the mobility management device provided in this embodiment may further include a sending unit 71, which may be configured to send second indication information to the UE, where the second indication information is used for indicating that a mobile communications network, to which the mobility management device belongs, supports the UE to perform the equipment access processing.

The receiving unit 61 in this embodiment may further receive a second access request message sent by the UE; accordingly, the sending unit 71 is specifically configured to send a second access response message to the UE, where the second access response message includes the second indication information.

In an optional embodiment of the present invention, if the first access request message is an attach request message, the access unit 62 may specifically construct a context of the UE, where the context of the UE is generated by the mobility management device according to subscription data of the UE provided by an HLR/HSS, or generated by the mobility management device according to the first indication information and according to local configuration data or default data, and accepts the first access request message according to the first indication information.

In an application scenario of the embodiment of the present invention, the access unit 62 may further send a first create session request message to a gateway device according to the first indication information, where the first create session request message includes third indication information, and the third indication information is used for instructing the gateway device to perform a first charging policy for a data service of the UE, or instructing the gateway device to use the third indication information to obtain and perform a first charging policy for a data service of the UE.

In another application scenario of the embodiment of the present invention, the access unit 62 may further receive an activate PDP context request message sent by the UE, and send a second create session request message to the gateway device according to the first indication information, where the second create session request message includes fourth indication information, and the fourth indication information is used for instructing the gateway device to perform the first charging policy for the data service of the UE, or instructing the gateway device to use the fourth indication information to obtain and perform the first charging policy for the data service of the UE.

In an optional embodiment of the present invention, if the first access request message is a PDN connectivity request message or the activate PDP context request message, the access unit 62 may specifically send a third create session request message to the gateway device according to the first indication information, where the third create session request message includes fifth indication information, and the fifth indication information is used for instructing the gateway device to perform the first charging policy for the data service of the UE, or instructing the gateway device to use the fifth indication information to obtain and perform the first charging policy for the data service of the UE.

In an optional embodiment of the present invention, if the first access request message is a location update request message, the access unit 62 may specifically send a delete bearer request message to the gateway device according to the first indication information, receive a delete bearer response message sent by the gateway device, and send a fourth create session request message to the gateway device, where the fourth create session request message includes sixth indication information, and the sixth indication information is used for instructing the gateway device to perform the first charging policy for the data service of the UE, or instructing the gateway device to use the sixth indication information to obtain and perform the first charging policy for the data service of the UE.

In an optional embodiment of the present invention, if the first access request message is the location update request message, the access unit 62 may further specifically send a modify bearer request message to the gateway device according to the first indication information, where the modify bearer request message includes seventh indication information, and the seventh indication information is used for instructing the gateway device to perform the first charging policy for the data service of the UE, or instructing the gateway device to use the seventh indication information to obtain and perform the first charging policy for the data service of the UE.

Optionally, the receiving unit 61 may further receive a third access request message sent by the UE, where the third access request message includes eighth indication information, and the eighth indication information is used for indicating that the UE cancels the equipment access; accordingly, the access unit 62 may further cancel the equipment access for the UE according to the eighth indication information.

In an optional embodiment of the present invention, if the third access request message is the PDN connectivity request message or the activate PDP context request message, the access unit 62 may specifically send a sixth create session request message to the gateway device according to the eighth indication information, where the sixth create session request message includes tenth indication information, and the tenth indication information is used for instructing the gateway device to perform a second charging policy for the data service of the UE, or instructing the gateway device to use the tenth indication information to obtain and perform a second charging policy for the data service of the UE.

In an optional embodiment of the present invention, if the third access request message is the location update request message, if the context of the UE in the mobility management device is generated according to the local configuration data or the default data, or if the mobility management device cannot acquire the subscription data of the UE from the HLR/HSS, or if the subscription data of the UE acquired by the mobility management device from the HLR/HSS does not allow access of the UE, the access unit 62 may specifically perform a detach procedure according to the eighth indication information.

In an optional embodiment of the present invention, if the third access request message is the location update request message, the access unit 62 may specifically send the delete bearer request message to the gateway device according to the eighth indication information, receive the delete bearer response message sent by the gateway device, and send a sixth create session request message to the gateway device, where the sixth create session request message includes eleventh indication information, and the eleventh indication information is used for instructing the gateway device to perform the second charging policy for the data service of the UE, or instructing the gateway device to use the eleventh indication information to obtain and perform the second charging policy for the data service of the UE.

In an optional embodiment of the present invention, if the third access request message is the location update request message, the access unit 62 may further specifically send the modify bearer request message to the gateway device, where the modify bearer request message includes twelfth indication information, and the twelfth indication information is used for instructing the gateway device to perform the second charging policy for the data service of the UE, or instructing the gateway device to use the tenth indication information to obtain and perform the second charging policy for the data service of the UE.

In this embodiment, a mobility management device receives, by using a receiving unit, a first access request message sent by a UE, where the first access request message includes first indication information, and the first indication information is used for indicating that the UE performs equipment access processing, so that an access unit can perform equipment access for the UE according to the first indication information. This avoid a problem in the prior art that a UE needs to establish a subscription relationship with an operator in order to access the Internet through a mobile communications network, thereby improving access flexibility of the UE.

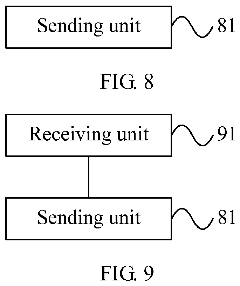

FIG. 8 is a schematic structural diagram of a user equipment according to another embodiment of the present invention. As shown in FIG. 8, the user equipment in this embodiment may include a sending unit 81, configured to send a first access request message to a mobility management device, where the first access request message includes first indication information, and the first indication information is used for indicating that the UE performs equipment access processing, so that the mobility management device performs equipment access for the UE according to the first indication information.

All functions of the UE in the embodiments corresponding to the foregoing FIG. 2, FIG. 3, FIG. 4, and FIG. 5 may be implemented by the user equipment provided in this embodiment.

Optionally, as shown in FIG. 9, the user equipment provided in this embodiment may further include a receiving unit 91, configured to receive second indication information sent by the mobility management device or a wireless access device, where the second indication information is used for indicating that a mobile communications network, to which the mobility management device or the wireless access device belongs, supports the UE to perform the equipment access processing.

For example, the sending unit 81 in this embodiment may further send a second access request message to the mobility management device; accordingly, the receiving unit 91 may be specifically configured to receive a second access response message sent by the mobility management device, and the second access response message includes the second indication information.

Optionally, the sending unit 81 may further be configured to send a third access request message to the mobility management device, where the third access request message includes eighth indication information, and the eighth indication information is used for indicating that the UE cancels equipment access, so that the access unit is further configured to cancel the equipment access for the UE according to the eighth indication information.

In this embodiment, a user equipment sends a first access request message to a mobility management device by using a sending unit, the first access request message includes first indication information, and the first indication information is used for indicating that a UE performs equipment access processing, so that the mobility management device can perform equipment access for the UE according to the first indication information. This avoid a problem in the prior art that a UE needs to establish a subscription relationship with an operator in order to access the Internet through a mobile communications network, thereby improving access flexibility of the UE. It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The foregoing integrated unit may be accomplished through hardware, or through hardware plus a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device or the like) to perform a part of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the invention, which is defined by the claims.

## Claims

1. An access method performed by a system comprising a mobility management device, a user equipment, UE, a portal server and a gateway device, the method comprising:
• receiving, by the mobility management device, an access request message sent by the UE, wherein the access request message comprises first indication information, and the first indication information is used for indicating that the UE performs equipment access, wherein the equipment access is a procedure in which the UE registers in a mobile communications network when there is no valid subscription data of the UE (step 201); and
• performing, by the mobility management device, the equipment access for the UE according to the first indication information, wherein the access request message is an attach request message, by:
∘ constructing, by the mobility management device, a context of the UE, wherein the context of the UE is generated according to the first indication information by the mobility management device according to local configuration data or default data (step 203); before accepting by the mobility management device the access request message according to the first indication information, performing the following steps:
∘ sending, by the mobility management device, a create session request message to the gateway device according to the first indication information, wherein the create session request message comprises second indication information, and the second indication information is used for instructing the gateway device to perform a charging policy for a data service of the UE (step 204);
wherein according to the charging policy the gateway device sends a triggering message to the portal server to trigger to complete charging processing; and thereafter
∘ accepting, by the mobility management device, the access request message according to the first indication information (step 206);
• sending, by the gateway device, the triggering message to the portal server (step 208);
• sending, by the portal server, a webpage for data service charging to the UE according to the received triggering message, wherein the webpage prompts a user of the UE to input a credit card account number to purchase a charging quota or to input information of an existing charging account.

2. The access method according to claim 1, wherein before the receiving, by the mobility management device, the access request message sent by the UE, further comprising:
sending, by the mobility management device, third indication information to the UE, wherein the third indication information is used for indicating that the mobile communications network, to which the mobility management device belongs, supports the UE to perform the equipment access.

3. An access method performed by a system comprising a mobility management device, a user equipment, UE, a portal server and a gateway device, the method comprising:
• receiving, by the mobility management device, an access request message sent by the UE, wherein the access request message comprises first indication information, and the first indication information is used for indicating that the UE performs equipment access, wherein the equipment access is a procedure in which the UE registers in a mobile communications network when there is no valid subscription data of the UE (step 201); and
• performing, by the mobility management device, the equipment access for the UE according to the first indication information, wherein the access request message is an attach request message, by:
∘ constructing, by the mobility management device, a context of the UE, wherein the context of the UE is generated according to the first indication information by the mobility management device according to local configuration data or default data (step 203); accepting, by the mobility management device, the access request message according to the first indication information (step 206), and thereafter
∘ receiving, by the mobility management device, an activate packet data protocol, PDP, context request message sent by the UE;
∘ sending, by the mobility management device, a create session request message to the gateway device according to the first indication information, wherein the create session request message comprises second indication information, and the second indication information is used for instructing the gateway device to perform a charging policy for a data service of the UE; wherein according to the charging policy the gateway service sends a triggering message to the portal server to trigger to complete charging processing (step 204);
• sending, by the gateway device, the triggering message to the portal server (step 208);
• sending, by the portal server, a webpage for data service charging to the UE according to the received triggering message, wherein the webpage prompts a user of the UE to input a credit card account number to purchase a charging quota or to input information of an existing charging account.

4. The access method according to claim 3, wherein before the receiving, by the mobility management device, the access request message sent by the UE, further comprising:
sending, by the mobility management device, third indication information to the UE, wherein the third indication information is used for indicating that the mobile communications network, to which the mobility management device belongs, supports the UE to perform the equipment access.

5. An access method performed by a system comprising a mobility management device, a user equipment, UE, a portal server and a gateway device, the method comprising:
• receiving, by the mobility management device, a access request message sent by the UE, wherein the access request message comprises first indication information, and the first indication information is used for indicating that the UE performs equipment access, wherein the equipment access is a procedure in which the UE registers in a mobile communications network when there is no valid subscription data of the UE (step 301); and
• performing, by the mobility management device, the equipment access for the UE according to the first indication information, wherein the access request message is a packet data network, PDN, connectivity request message or an activate PDP context request message, by:
∘ sending, by the mobility management device, a create session request message to the gateway device according to the first indication information, wherein the create session request message comprises second indication information, and the second indication information is used for instructing the gateway device to perform a charging policy for a data service of the UE (step 302),
wherein according to the charging policy the gateway device sends a triggering message to the portal server to trigger to complete charging processing;
• sending, by the gateway device, the triggering message to the portal server (step 306);
• sending, by the portal server, a webpage for data service charging to the UE according to the received triggering message, wherein the webpage prompts a user of the UE to input a credit card account number to purchase a charging quota or to input information of an existing charging account.

6. The access method according to claim 5, wherein before the receiving, by the mobility management device, the access request message sent by the UE, further comprising:
sending, by the mobility management device, third indication information to the UE, wherein the third indication information is used for indicating that the mobile communications network, to which the mobility management device belongs, supports the UE to perform the equipment access.

7. A system comprising a mobility management device, a user equipment, UE, a portal server and a gateway device, wherein each of the mobility management device, UE, portal server and gateway device is configured to perform its respective steps as defined in any of the methods according to claims 1 - 6.

## Patentansprüche

1. Zugriffsverfahren, das von einem System durchgeführt wird, das eine Mobilitätsverwaltungsvorrichtung, ein Benutzergerät (User Equipment, UE), einen Portalserver und eine Gatewayvorrichtung umfasst, das Verfahren umfassend:
• Empfangen, durch die Mobilitätsverwaltungsvorrichtung, einer von dem UE gesendeten Zugriffsanforderungsnachricht, wobei die Zugriffsanforderungsnachricht eine erste Anzeigeinformation umfasst und die erste Anzeigeinformation verwendet wird, um anzuzeigen, dass das UE einen Gerätezugriff durchführt, wobei der Gerätezugriff eine Prozedur ist, bei der sich das UE in einem Mobilkommunikationsnetzwerk anmeldet, wenn keine gültigen Teilnehmerdaten des UE vorhanden sind (Schritt 201); und
• Durchführen, durch die Mobilitätsverwaltungsvorrichtung, des Gerätezugriffs für das UE gemäß der ersten Anzeigeinformation, wobei die Zugriffsanforderungsnachricht eine Verbindungsanforderungsnachricht ist, durch:
o Erstellen, durch die Mobilitätsverwaltungsvorrichtung, eines Kontexts des UE, wobei der Kontext des UE gemäß der ersten Anzeigeinformation durch die Mobilitätsverwaltungsvorrichtung gemäß den lokalen Konfigurationsdaten oder Standarddaten erzeugt wird (Schritt 203);
• vor dem Annehmen, durch die Mobilitätsverwaltungsvorrichtung, der Zugriffsanforderungsnachricht gemäß der ersten Anzeigeinformation, Durchführen der folgenden Schritte:
o Senden, durch die Mobilitätsverwaltungsvorrichtung, einer Sitzungserstellungsanforderungsnachricht an die Gatewayvorrichtung gemäß der ersten Anzeigeinformation, wobei die Sitzungserstellungsanforderungsnachricht eine zweite Anzeigeinformation umfasst und die zweite Anzeigeinformation verwendet wird, um die Gatewayvorrichtung anzuweisen, eine Abrechnungsrichtlinie für einen Datendienst des UE durchzuführen (Schritt 204);
wobei die Gatewayvorrichtung gemäß der Abrechnungsrichtlinie eine Auslösenachricht an den Portalserver sendet, um den Abschluss der Abrechnungsverarbeitung auszulösen, und danach
o Annehmen, durch die Mobilitätsverwaltungsvorrichtung, der Zugriffsanforderungsnachricht gemäß der ersten Anzeigeinformation (Schritt 206);
• Senden, durch die Gatewayvorrichtung, der Auslösenachricht an den Portalserver (Schritt 208);
• Senden, durch den Portalserver, einer Webseite für die Datendienstabrechnung an das UE gemäß der empfangenen Auslösenachricht, wobei die Webseite einen Benutzer des UE dazu auffordert, die Nummer eines Kreditkartenkontos einzugeben, um ein Abrechnungskontingent zu kaufen, oder eine Information über ein vorhandenes Abrechnungskonto einzugeben.

2. Zugriffsverfahren nach Anspruch 1, vor dem Empfangen, durch die Mobilitätsverwaltungsvorrichtung, der von dem UE gesendeten Zugriffsanforderungsnachricht ferner umfassend:
• Senden, durch die Mobilitätsverwaltungsvorrichtung, einer dritten Anzeigeinformation an das UE, wobei die dritte Anzeigeinformation verwendet wird, um anzuzeigen, dass das Mobilkommunikationsnetzwerk, zu dem die Mobilitätsverwaltungsvorrichtung gehört, das UE bei der Durchführung des Gerätezugriffs unterstützt.

3. Zugriffsverfahren, das von einem System durchgeführt wird, das eine Mobilitätsverwaltungsvorrichtung, ein Benutzergerät (UE), einen Portalserver und eine Gatewayvorrichtung umfasst, das Verfahren umfassend:
• Empfangen, durch die Mobilitätsverwaltungsvorrichtung, einer von dem UE gesendeten Zugriffsanforderungsnachricht, wobei die Zugriffsanforderungsnachricht eine erste Anzeigeinformation umfasst und die erste Anzeigeinformation verwendet wird, um anzuzeigen, dass das UE einen Gerätezugriff durchführt, wobei der Gerätezugriff eine Prozedur ist, bei der sich das UE in einem Mobilkommunikationsnetzwerk anmeldet, wenn keine gültigen Teilnehmerdaten des UE vorhanden sind (Schritt 201); und
• Durchführen, durch die Mobilitätsverwaltungsvorrichtung, des Gerätezugriffs für das UE gemäß der ersten Anzeigeinformation, wobei die Zugriffsanforderungsnachricht eine Verbindungsanforderungsnachricht ist, durch:
o Erstellen, durch die Mobilitätsverwaltungsvorrichtung, eines Kontexts des UE, wobei der Kontext des UE gemäß der ersten Anzeigeinformation durch die Mobilitätsverwaltungsvorrichtung gemäß den lokalen Konfigurationsdaten oder Standarddaten erzeugt wird (Schritt 203); Annehmen, durch die Mobilitätsverwaltungsvorrichtung, der Zugriffsanforderungsnachricht gemäß der ersten Anzeigeinformation (Schritt 206); und anschließend
o Empfangen, durch die Mobilitätsverwaltungsvorrichtung, einer von dem UE gesendeten Paketdatenprotokoll (Packet Data Protocol, PDP)-Kontextaktivierungsnachricht;
o Senden, durch die Mobilitätsverwaltungsvorrichtung, einer Sitzungserstellungsanforderungsnachricht an die Gatewayvorrichtung gemäß der ersten Anzeigeinformation, wobei die Sitzungserstellungsanforderungsnachricht eine zweite Anzeigeinformation umfasst und die zweite Anzeigeinformation verwendet wird, um die Gatewayvorrichtung anzuweisen, eine Abrechnungsrichtlinie für einen Datendienst des UE durchzuführen; wobei der Gatewaydienst gemäß der Abrechnungsrichtlinie eine Auslösenachricht an den Portalserver sendet, um den Abschluss der Abrechnungsverarbeitung auszulösen (Schritt 204);
• Senden, durch die Gatewayvorrichtung, der Auslösenachricht an den Portalserver (Schritt 208);
• Senden, durch den Portalserver, einer Webseite für die Datendienstabrechnung an das UE gemäß der empfangenen Auslösenachricht, wobei die Webseite einen Benutzer des UE dazu auffordert, die Nummer eines Kreditkartenkontos einzugeben, um ein Abrechnungskontingent zu kaufen, oder eine Information über ein vorhandenes Abrechnungskonto einzugeben.

4. Zugriffsverfahren nach Anspruch 3, vor dem Empfangen, durch die Mobilitätsverwaltungsvorrichtung, der von dem UE gesendeten Zugriffsanforderungsnachricht ferner umfassend:
Senden, durch die Mobilitätsverwaltungsvorrichtung, einer dritten Anzeigeinformation an das UE, wobei die dritte Anzeigeinformation verwendet wird, um anzuzeigen, dass das Mobilkommunikationsnetzwerk, zu dem die Mobilitätsverwaltungsvorrichtung gehört, das UE bei der Durchführung des Gerätezugriffs unterstützt.

5. Zugriffsverfahren, das von einem System durchgeführt wird, das eine Mobilitätsverwaltungsvorrichtung, ein Benutzergerät (UE), einen Portalserver und eine Gatewayvorrichtung umfasst, das Verfahren umfassend:
• Empfangen, durch die Mobilitätsverwaltungsvorrichtung, einer von dem UE gesendeten Zugriffsanforderungsnachricht, wobei die Zugriffsanforderungsnachricht eine erste Anzeigeinformation umfasst und die erste Anzeigeinformation verwendet wird, um anzuzeigen, dass das UE einen Gerätezugriff durchführt, wobei der Gerätezugriff eine Prozedur ist, bei der sich das UE in einem Mobilkommunikationsnetzwerk anmeldet, wenn keine gültigen Teilnehmerdaten des UE vorhanden sind (Schritt 301); und
• Durchführen, durch die Mobilitätsverwaltungsvorrichtung, des Gerätezugriffs für das UE gemäß der ersten Anzeigeinformation, wobei die Zugriffsanforderungsnachricht eine Paketdatennetzwerk (Packet Data Network, PDN)-Konnektivitätsanforderungsnachricht oder eine PDP-Kontextaktivierungsnachricht ist, durch:
o Senden, durch die Mobilitätsverwaltungsvorrichtung, einer Sitzungserstellungsanforderungsnachricht an die Gatewayvorrichtung gemäß der ersten Anzeigeinformation, wobei die Sitzungserstellungsanforderungsnachricht eine zweite Anzeigeinformation umfasst und die zweite Anzeigeinformation verwendet wird, um die Gatewayvorrichtung anzuweisen, eine Abrechnungsrichtlinie für einen Datendienst des UE durchzuführen (Schritt 302),
wobei die Gatewayvorrichtung gemäß der Abrechnungsrichtlinie eine Auslösenachricht an den Portalserver sendet, um den Abschluss der Abrechnungsverarbeitung auszulösen;
• Senden, durch die Gatewayvorrichtung, der Auslösenachricht an den Portalserver (Schritt 306);
• Senden, durch den Portalserver, einer Webseite für die Datendienstabrechnung an das UE gemäß der empfangenen Auslösenachricht, wobei die Webseite einen Benutzer des UE dazu auffordert, die Nummer eines Kreditkartenkontos einzugeben, um ein Abrechnungskontingent zu kaufen, oder eine Information über ein vorhandenes Abrechnungskonto einzugeben.

6. Zugriffsverfahren nach Anspruch 5, vor dem Empfangen, durch die Mobilitätsverwaltungsvorrichtung, der von dem UE gesendeten Zugriffsanforderungsnachricht ferner umfassend:
Senden, durch die Mobilitätsverwaltungsvorrichtung, einer dritten Anzeigeinformation an das UE, wobei die dritte Anzeigeinformation verwendet wird, um anzuzeigen, dass das Mobilkommunikationsnetzwerk, zu dem die Mobilitätsverwaltungsvorrichtung gehört, das UE bei der Durchführung des Gerätezugriffs unterstützt.

7. System, umfassend eine Mobilitätsverwaltungsvorrichtung, ein Benutzergerät (UE), einen Portalserver und eine Gatewayvorrichtung, wobei die Mobilitätsverwaltungsvorrichtung, das UE, der Portalserver und die Gatewayvorrichtung jeweils konfiguriert sind, um ihre jeweiligen Schritte durchzuführen, wie in einem beliebigen der Verfahren gemäß den Ansprüchen 1 bis 6 definiert.

## Revendications

1. Procédé d'accès exécuté par un système comprenant un dispositif de gestion de la mobilité, un équipement d'utilisateur, UE (user equipment) un équipement de portail, un serveur de portail et un dispositif de passerelle, le procédé comprenant les étapes consistant à :
• recevoir, par le dispositif de gestion de la mobilité, un message de demande d'accès envoyé par l'UE, dans lequel le message de demande d'accès comprend une première information d'indication, et la première information d'indication est utilisée pour indiquer que l'UE effectue un accès à l'équipement, dans lequel l'accès à l'équipement est une procédure dans laquelle l'UE s'inscrit dans un réseau de communication mobile lorsqu'il n'existe pas de données d'abonnement valides de l'UE (étape 201) ; et
• effectuer, par le dispositif de gestion de la mobilité, l'accès à l'équipement pour l'UE selon la première information d'indication, dans lequel le message de demande d'accès est un message de demande de rattachement, en :
∘ construisant, par le dispositif de gestion de la mobilité, un contexte de l'UE, dans lequel le contexte de l'UE est généré en fonction de la première information d'indication par le dispositif de gestion de la mobilité en fonction de données de configuration locales ou de données par défaut (étape 203) ; avant d'accepter par le dispositif de gestion de la mobilité le message de demande d'accès selon la première information d'indication, le procédé met en oeuvre les étapes consistant à :
∘ envoyer, par le dispositif de gestion de la mobilité, un message de demande de création de session au dispositif passerelle en fonction de la première information d'indication, dans lequel le message de demande de création de session comprend une seconde information d'indication, et la seconde information d'indication est utilisée pour demander au dispositif de passerelle de mettre en oeuvre une politique de taxation pour un service de données de l'UE (étape 204) ;
dans lequel, en fonction de la politique de taxation, le dispositif de passerelle envoie un message de déclenchement au serveur de portail afin de déclencher le traitement de taxation ; et ensuite le procédé comprend les étapes consistant à :
∘ accepter, par le dispositif de gestion de la mobilité, le message de demande d'accès selon la première information d'indication (étape 206) ;
• envoyer, par le dispositif de passerelle, le message de déclenchement au serveur de portail (étape 208) ;
• envoyer, par le serveur de portail, une page Web de taxation du service de données à l'UE en fonction du message de déclenchement reçu, dans lequel la page Web invite un utilisateur de l'UE à saisir un numéro de compte de carte de crédit pour acheter une quote-part de la taxation ou à saisir les informations d'un compte de taxation existant.

2. Procédé d'accès selon la revendication 1, dans lequel, avant de recevoir, par le dispositif de gestion de la mobilité, un message de demande d'accès envoyé par l'UE, le procédé comprend en outre l'étape consistant à :
envoyer, par le dispositif de gestion de la mobilité, une troisième information d'indication à l'UE, dans lequel la troisième information d'indication est utilisée pour indiquer que le réseau de communication mobile, auquel appartient le dispositif de gestion de mobilité, prend en charge l'UE pour effectuer l'accès à l'équipement.

3. Procédé d'accès exécuté par un système comprenant un dispositif de gestion de la mobilité, un équipement d'utilisateur, UE (user equipment) un équipement de portail, un serveur de portail et un dispositif de passerelle, le procédé comprenant les étapes consistant à :
• recevoir, par le dispositif de gestion de la mobilité, un message de demande d'accès envoyé par l'UE, dans lequel le message de demande d'accès comprend une première information d'indication, et la première information d'indication est utilisée pour indiquer que l'UE effectue un accès à l'équipement, dans lequel l'accès à l'équipement est une procédure dans laquelle l'UE s'inscrit dans un réseau de communication mobile lorsqu'il n'existe pas de données d'abonnement valides de l'UE (étape 201) ; et
• effectuer, par le dispositif de gestion de la mobilité, l'accès à l'équipement pour l'UE selon la première information d'indication, dans lequel le message de demande d'accès est un message de demande de rattachement, en :
∘ construisant, par le dispositif de gestion de la mobilité, un contexte de l'UE, dans lequel le contexte de l'UE est généré en fonction de la première information d'indication par le dispositif de gestion de la mobilité en fonction de données de configuration locales ou de données par défaut (étape 203) ; accepter, par le dispositif de gestion de la mobilité, le message de demande d'accès selon la première information d'indication (étape 206), et ensuite le procédé comprend les étapes consistant à :
∘ recevoir, par le dispositif de gestion de la mobilité, un message de demande de contexte d'activation de protocole de données par paquet, PDP (packet data protocol), envoyé par l'UE ;
∘ envoyer, par le dispositif de gestion de la mobilité, un message de demande de création de session au dispositif passerelle en fonction de la première information d'indication, dans lequel le message de demande de création de session comprend une seconde information d'indication, et la seconde information d'indication est utilisée pour demander au dispositif de passerelle de mettre en oeuvre une politique de taxation pour un service de données de l'UE ; dans lequel, en fonction de la politique de taxation, le service de passerelle envoie un message de déclenchement au serveur de portail afin de déclencher le traitement de taxation (étape 204) ;
• envoyer, par le dispositif de passerelle, le message de déclenchement au serveur de portail (étape 208) ;
• envoyer, par le serveur de portail, une page Web de taxation du service de données à l'UE en fonction du message de déclenchement reçu, dans lequel la page Web invite un utilisateur de l'UE à saisir un numéro de compte de carte de crédit pour acheter une quote-part de la taxation ou à saisir les informations d'un compte de taxation existant.

4. Procédé d'accès selon la revendication 3, dans lequel, avant de recevoir, par le dispositif de gestion de la mobilité, un message de demande d'accès envoyé par l'UE, le procédé comprend en outre l'étape consistant à :
envoyer, par le dispositif de gestion de la mobilité, une troisième information d'indication à l'UE, dans lequel la troisième information d'indication est utilisée pour indiquer que le réseau de communication mobile, auquel appartient le dispositif de gestion de mobilité, prend en charge l'UE pour effectuer l'accès à l'équipement.

5. Procédé d'accès exécuté par un système comprenant un dispositif de gestion de la mobilité, un équipement d'utilisateur, UE, un équipement de portail, un serveur de portail et un dispositif de passerelle, le procédé comprenant les étapes consistant à :
• recevoir, par le dispositif de gestion de la mobilité, un message de demande d'accès envoyé par l'UE, dans lequel le message de demande d'accès comprend une première information d'indication, et la première information d'indication est utilisée pour indiquer que l'UE effectue un accès à l'équipement, dans lequel l'accès à l'équipement est une procédure dans laquelle l'UE s'inscrit dans un réseau de communication mobile lorsqu'il n'existe pas de données d'abonnement valides de l'UE (étape 301) ; et
• effectuer, par le dispositif de gestion de la mobilité, l'accès à l'équipement pour l'UE selon la première information d'indication, dans lequel le message de demande d'accès est un message de demande de connectivité à un réseau de données par paquets, PDN, (packet data network) ou un message de demande d'activation de contexte PDP, en :
∘ envoyant, par le dispositif de gestion de la mobilité, un message de demande de création de session au dispositif passerelle en fonction de la première information d'indication, dans lequel le message de demande de création de session comprend une seconde information d'indication, et la seconde information d'indication est utilisée pour demander au dispositif de passerelle de mettre en oeuvre une politique de taxation pour un service de données de l'UE (étape 302), dans lequel, en fonction de la politique de taxation, le dispositif de passerelle envoie un message de déclenchement au serveur de portail afin de déclencher le traitement de taxation ;
• envoyer, par le dispositif de passerelle, le message de déclenchement au serveur de portail (étape 306) ;
• envoyer, par le serveur de portail, une page Web de taxation du service de données à l'UE en fonction du message de déclenchement reçu, dans lequel la page Web invite un utilisateur de l'UE à saisir un numéro de compte de carte de crédit pour acheter une quote-part de la taxation ou à saisir les informations d'un compte de taxation existant.

6. Procédé d'accès selon la revendication 5, dans lequel, avant de recevoir, par le dispositif de gestion de la mobilité, un message de demande d'accès envoyé par l'UE, le procédé comprend en outre l'étape consistant à :
envoyer, par le dispositif de gestion de la mobilité, une troisième information d'indication à l'UE, dans lequel la troisième information d'indication est utilisée pour indiquer que le réseau de communication mobile, auquel appartient le dispositif de gestion de mobilité, prend en charge l'UE pour effectuer l'accès à l'équipement.

7. Système comprenant un dispositif de gestion de la mobilité, un équipement d'utilisateur, UE, un équipement de portail, un serveur de portail et un dispositif de passerelle, dans lequel chacun des dispositifs de gestion de mobilité, UE, serveur de portail et dispositif de passerelle est configuré pour exécuter ses étapes respectives telles que définies dans l'un quelconque des procédés selon les revendications 1 à 6.
